Europäisches Patentamt

European Patent Office

Office européen des brevets

(11) Publication number:

**0 236 067**
**A2**

# EUROPEAN PATENT APPLICATION

(21) Application number: 87301661.2

(22) Date of filing: 25.02.87

(51) Int. Cl.⁴: **F 16 C 13/00**

(30) Priority: 07.03.86 JP 51090/86
07.03.86 JP 51091/86

(43) Date of publication of application:
09.09.87 Bulletin 87/37

(84) Designated Contracting States:
CH DE FR GB IT LI NL SE

(71) Applicant: **Yano, Akechi**
**2, Kikusuidori 4-chome**
**Moriguchishi Osakafu (JP)**

(72) Inventor: **Yano, Akechi**
**2, Kikusuidori 4-chome**
**Moriguchishi Osakafu (JP)**

(74) Representative: **Purvis, William Michael Cameron et al**
**D. Young & Co. 10 Staple Inn**
**London WC1V 7RD (GB)**

(54) **Rolls with curved shafts.**

(57) A roll (R1) comprises a curved roller shaft (1a) and a roller (2a) the external circumference of which increases progressively in an axial direction from the central part towards each end of the roller (2a).

FIG. IA

**Description**

ROLLS WITH CURVED SHAFTS

This invention relates to rolls with curved shafts.

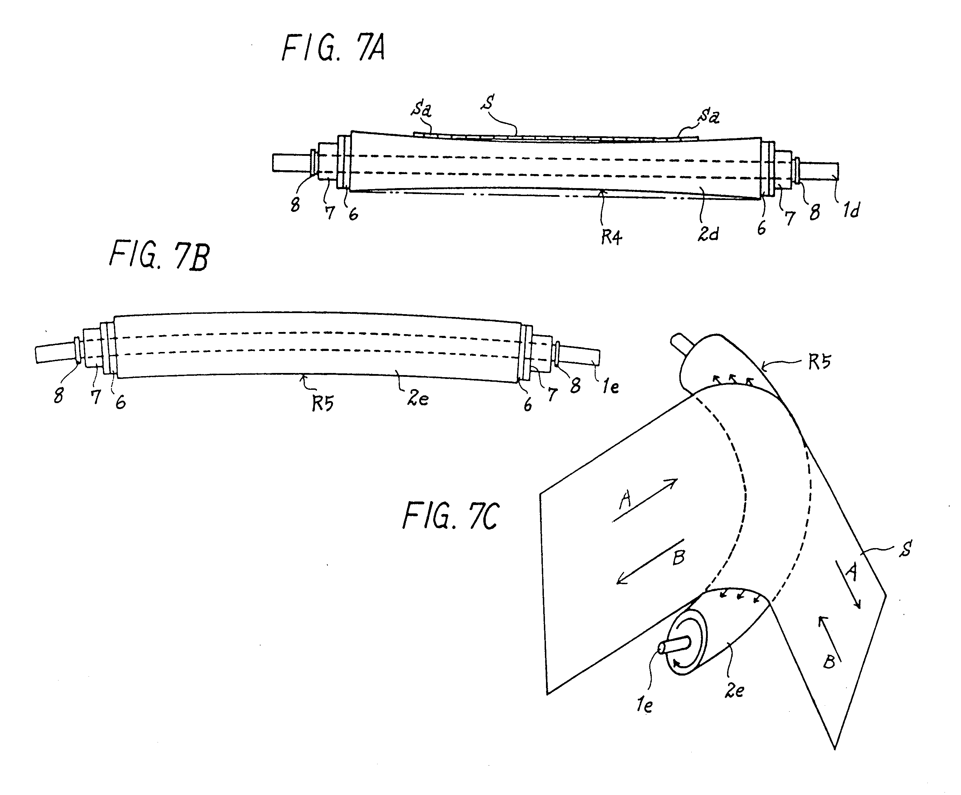

A previously proposed roll R4 having a wrinkle stretching or wrinkle preventing capability, is shown in Figure 7A of the accompanying drawings, and comprises a roller 2d whose external circumference increases progressively from the central part towards each end, rotatably mounted on a straight roller shaft 1d. There is a problem with the roll R4 which is, if material S to be passed by the roller 2d makes a wide contact (up to Sa) with the roller 2d, the material S may be distorted and given a permanent set. Moreover, if the difference between the external circumference of the central part of the roller 2d and that of the ends is increased to increase the force extending the material S in its cross-wise direction, then there is difficulty in causing the material S to travel in a stable manner.

On the other hand, as shown in Figure 7B of the accompanying drawings, a roll R5 comprising a roller 2e of uniform cross-section rotatably provided on a curved or arched roller shaft 1e is known. As shown in Figure 7C of the accompanying drawings, if the material S is passed around the roller 2e from the concave side of the roller shaft 1e curve to the convex side, then a force extending the material S in its cross-wise direction is applied. However, if the degree of curvature of the roll R5 is increased in order that this extending force be increased, then the material S may be given a large permanent set, and also there is difficulty in causing the material S to travel in a stable manner.

For this reason, theses rolls R4 and R5 can only be used with extremely soft materials such as plastics film, without giving rise to wrinkles in the material.

According to the present invention there is provided a roll comprising:
a curved roller shaft;
characterised by:
a roller the external circumference of which increases progressively in an axial direction from the central part towards each end of the roller.

The invention will now be described by way of example with reference to the accompanying drawings, in which:

Figure 1A is a side view of an embodiment of roll according to the present invention wherein part of the external periphery of a roller forms an axial straight line;

Figure 1B is a partially enlarged sectional view of the left half of roll of Figure 1A;

Figure 2 is a side view of another embodiment of roll according to the present invention wherein part of the external periphery of a roller forms an axial line with a concave catenary curve;

Figure 3A is a side view of a further embodiment of roll according to the present invention wherein part of the external periphery of a roller forms an axial curved line;

Figure 3B is an end view of the roll of Figure 3A;

Figure 3C is an outline view of a material being passed around the roll of Figure 3A;

Figure 4A is a perspective view of a roller shaft for an embodiment of roll according to the present invention;

Figure 4B is an end view of another roller shaft for an embodiment of roll according to the present invention;

Figures 4C and 4D are perspective views other parts of respective rollers for embodiments of roll according to the present invention;

Figure 5 is a perspective view of the roll of Figure 3A in use;

Figure 6A is an outline view of a pair of rolls, each according to the present invention, arranged opposite to each other with a gap therebetween;

Figures 6B and 6C are outline views of a pair of expansion type rolls according to the present invention arranged opposite to each other in compressed condition;

Figure 6D is a view of the action of extending a material passed between a pair of rolls arranged opposite to each other as shown in Figure 6C;

Figure 7A is a side view of a previously proposed roll;

Figure 7B is a side view of a known roll of uniform diameter with a curved shaft; and

Figure 7C is a perspective view of the mode of using the roll of Figure 7B.

The embodiments of roll according to the present invention to be described each comprise a roller whose external configuration is such that its external circumference (and hence its diameter) increases progressively in an axial direction from the central part of the roller towards each end of the roller, and a curved or arched roller shaft which supports the roller in a rotatable manner.

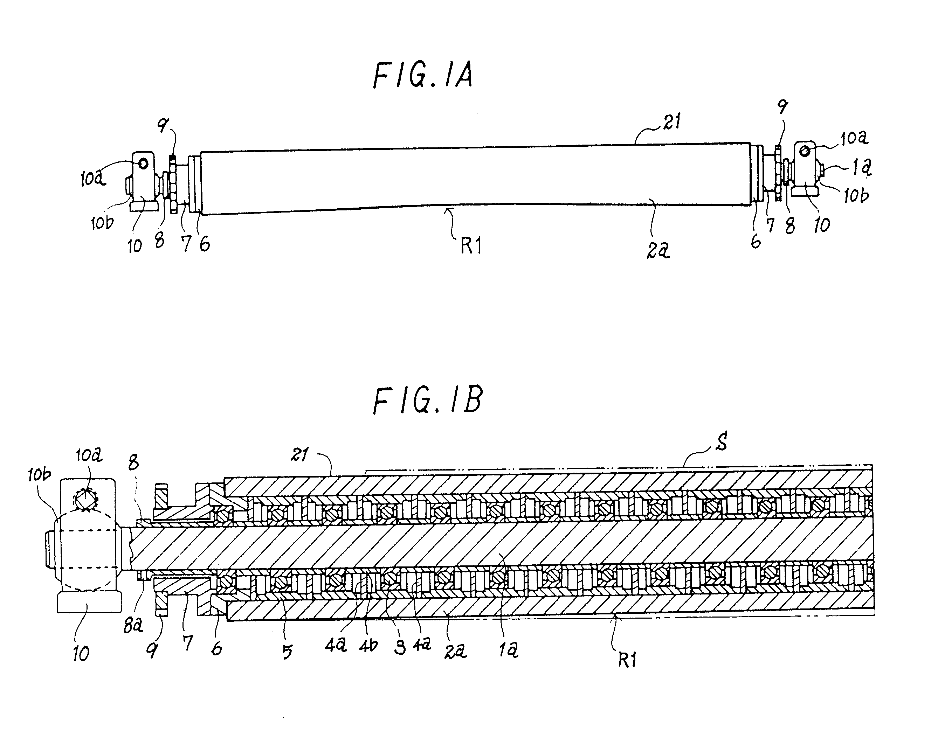

The roll R1 of Figures 1A and 1B comprises a curved roller shaft 1a and a sheet rubber roller 2a. The configuration is such that one axial line in the surface of the roller 2a, the upper axial line 21 in Figure 1A is straight, that is not curved, despite the curvature of the roller shaft 1a, when the roller shaft 1a is arranged to be concave downwards. As shown in Figure 1B, the roller 2a is rotatably mounted on the roller shaft 1a by way of a plurality of casings 5 housing bearings 3. Ring-shaped spacers 4a of constant thickness are provided between the casings 5. The external configuration of the rubber roller 2a is such that its outer circumference gradually progressively increases in an axial direction from the central part towards each end part.

Sleeves 4b are fitted onto the roller shaft 1a so that gaps can occur between the bearings 3. End flanges 6 are fitted in each end of the rubber roller 2a, set flanges 7 are mounted on the external sides of the end flanges 6, set sleeves 8 are fitted onto the roller shaft 1a, screw holes 8a permit the set sleeves 8 to be fixed to the roller shaft 1a, and gears 9 transmit a driving force for rotation. Units 10 permitting adjustment of the shaft angle, and forming part of a roll supporting device, are provided at each end of the roll R1. The units 10 comprise rotatable spherical members 10b, and screw shafts 10a which are screwed into tapped grooves on the external periphery of respective spherical members 10b, and which permit rotation of spherical members 10b and hence of the roller shaft 1a mounted thereon.

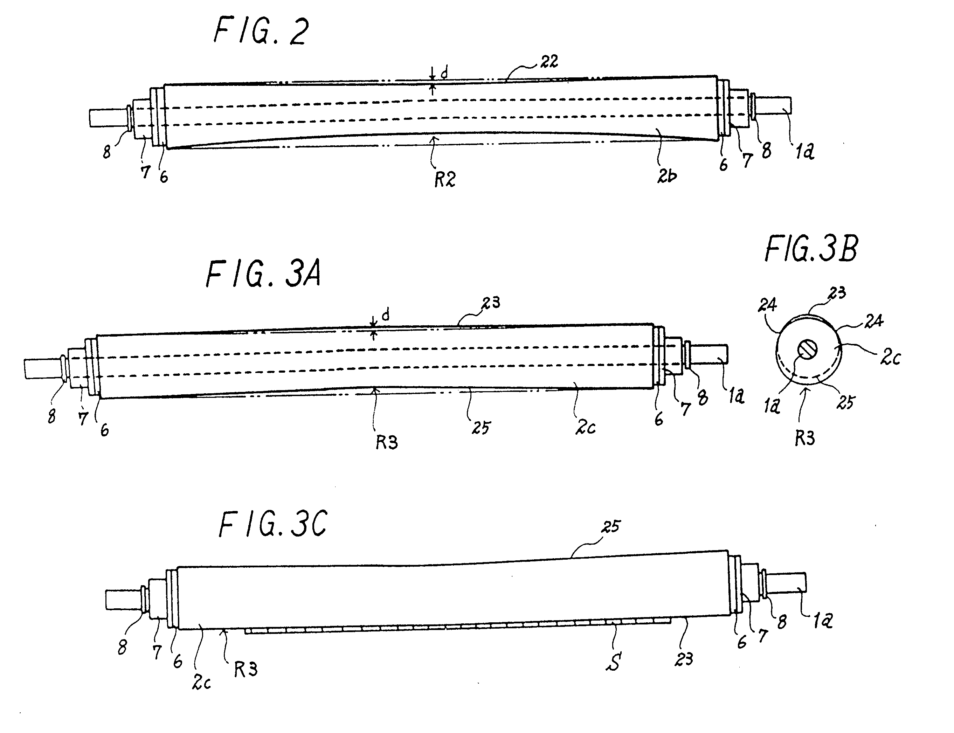

The roll R2 of Figure 2 comprises a roller 2b and a curved roller shaft 1a. In this case the configuration is such that the upper axial line 22 in Figure 2 is a concave catenary shape when the roller shaft 1a is arranged to be concave downwards. Otherwise the roll R2 has the same construction as the roll R1 of Figures 1A and 1B.

The roll R3 of Figures 3A to 3C comprises a roller 2c and a curved roller shaft 1a. In this case the configuration is such that the upper axial line 23 is a slightly convex curved shape when the roller shaft 1a is arranged to be concave downwards. Otherwise the roll R3 has the same construction as the roll R1 of Figures 1A and 1B. As shown in Figure 3B, the roll R3 has an axial line 24 which is straight, located between the slightly curved line 23 and an axial concave curved line 25, whose degree of curvature is greater than that of the line 23.

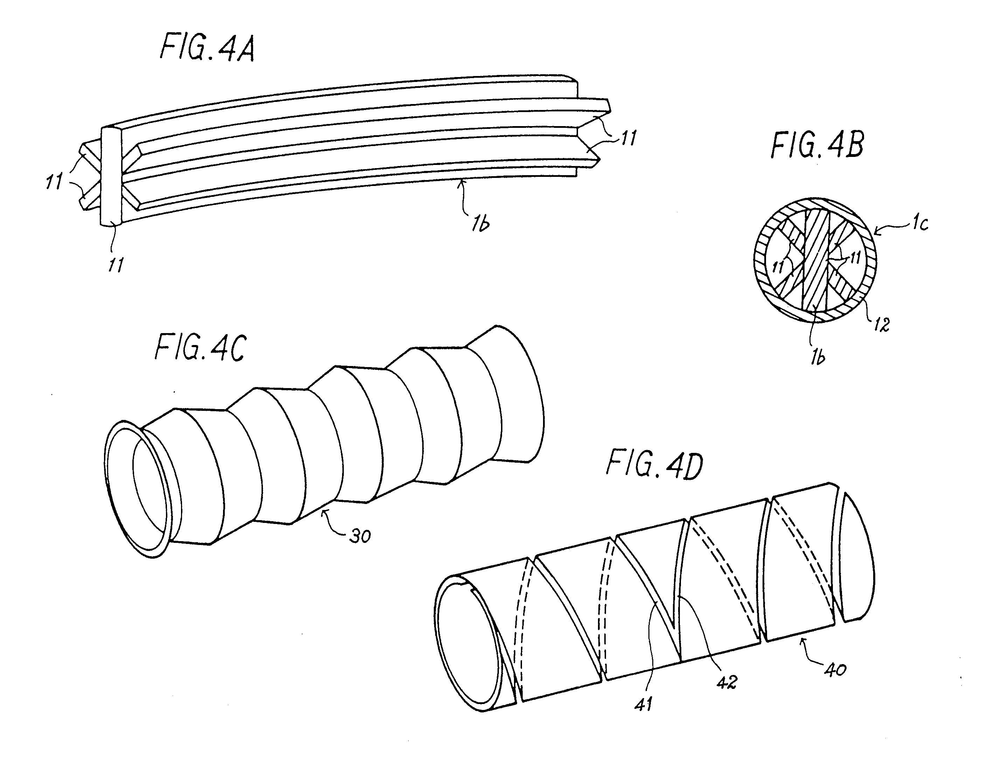

A roll according to the present invention may be made, for example by the following method. First, the rubber roller 2a, which initially is thick enough to allow for some thickness to be cut from it, is rotatably mounted, for example, by way of an intermediate member such as a bearing casing, a roller, a bellows-shaped cylinder (Figure 4C), a cylinder having a spiral gap (Figure 4D), a rotation-proof member, or a rotation auxiliary member such as a normal or self-aligning type ball bearing and sliding bearing, if necessary, on the roller shaft which is in the predetermined curved state. Next, the roller 2a is horizontally installed such that the roller shaft 1a has a vertical elevation projection with a curve corresponding to the required curve or arch concave downwards. Subsequently, while so fixed, the predetermined part on the surface layer of the roller 2a which is continuously fed as the upper part of the roller 2a during rotation of the roller 2a ia cut by a cutting tool which is moved over the roller 2a at the required predetermined distance such that the part of the roller 2a coming to the top during the rotation of the roller 2a axially forms the straight line (roll R1), the predetermined concave catenary curve (roll R2), or the predetermined convex curve (roll R3).

The roller shafts in embodiments of roll according to the present invention are curved, whereby, while some part of the external periphery of the roller contains an axial straight line, the external appearance of the roller when stationary state is identical to that of such a roller when rotated. It is accepted that the degree of curvature of the roller shaft is limited by the fact that the roller mounted on the roller shaft must be rotatable with respect to the roller shaft.

Generally speaking, the radius of curvature of the roller shaft thereof is 9 mm to 400 m, preferably 18 mm to 200 m, and more preferably 36 mm to 100 m. As the degree of curvature of the roller shaft is increased, the difference between the circumference of the central part of the roller and that of the ends can be progressively increased. No special limit is put on the length and diameter of the roller shaft. Generally, while the length thereof is 8 mm to 20 m, preferably 12 mm to 10 m, and more preferably 15 mm to 6 m, the diameter thereof is 1 mm to 5 m, preferably 2 mm to 2 m, and more preferably 5 mm to 1 m.

No special limit is put on the sectional structure or the specification of the roller shaft. An acceptable option is a round-shape as illustrated in the above embodiments. An alternative type, wherein the weight is reduced and the bending strength is substantially increased is shown in Figure 4A, and comprises a bar 1b formed by a plurality of radial plate-shaped members 11. In Figure 4B, a bar 1b similar to Figure 4A is housed in a pipe 12 to form a roller shaft 1a capable of being cooled by passing cooling fluid through it axially.

The roller in embodiments of roll according to the present invention has the circumference increasing progressively in the axial direction from its central part towards its ends, thereby obtaining a roll wherein a force tending to extend material passed across the roll acts on the material in its cross-wise direction. As illustrated in the above rolls R1, R2 and R3, the external configuration is such that some part of the external periphery of the roller contains an axial straight line, whereby a material can be passed across the roll while remaining flat.

The embodiments of roll according to the present invention are deformed during the rotation of the roller around the roller shaft, thereby enabling the roller to be rotated. The deformation of the roller may be classified into an amplitude type and an elasticity type. In the amplitude type the axial degree of curvature of the external surface of the roller during the rotation of the roller around the roller shaft gives rise to an amplitude alteration in a radial direction. This effect can be obtained, for example, by forming the surface layer of the roller as a cylinder comprising a plurality of parallel plates, so that the surface layer of the roller can slide axially slide with respect to internal members, such as the casings 5 of Figure 1B, which make contact with the plates during rotation of the roller and, at the same time, alter the degree of curvature. On the other hand, in the elasticity type, the surface layer of the roller is, for example, made of rubber which is correspondingly rotated around the roller shaft. The rolls R1, R2 and R3 are of the elasticity type, and each part of the rubber roller 2a responds elastically to the angle or rotation around the roller shaft 1a, giving a transition in the shape.

For this reason, the surface layer of the roller is formed by material which allows the deformation as an alteration of the degree of curvature or by flexibility in the case of the amplitude type. It is formed by rubber-like elastic material in the case of the elasticity type. Examples of material for the surface layer of the roller comprise wood, rubber (rubber-lining), plastics material, ordinary metal, rubber-like and resilient metal such as Ni-Ti alloy or Cu-Zu-Al alloy, and soft ceramic. Rubber-like, metallic and ceramic type rollers are preferred for preventing sliding of the material to be passed, preventing dust adhesion caused by conductivity, and heat resistance, respectively. An acceptable option is that the roller has its external periphery formed with grooves and/or projections for fluid drainage and preventing slipping. A further option is for the roller to have its surfaces covered with a known cover such as cloth and sponge.

No special limit is put on the dimension of the roller. Generally, the length thereof is 4 mm to 18 m, preferably 8 mm to 9 m, and more preferably 10 mm to 5m. The maximum circumference (on both the end parts) is 10 mm to 10 m, preferably 20 mm to 5 m, and more preferably 50 mm to 3 m, and the difference between the minimum circumference on the central part and the maximum circumference on the end parts is 0.5 mm to 1 m, preferably 1 mm to 30 cm, and more preferably 1 mm to 5 cm.

For the concave and convex types, a gap d (Figures 2 and 3A) between the roller surface at the central part on the upper part of the roller and the line joining the ends of the roller in the case where the roller shaft is concave downwards is, generally speaking, preferably 0.1 mm to 10 cm.

The roll R1 of Figure 1A, for example, uses a steel (55C) roller shaft 1a, 1620 mm in length, 25717.7 mm in radius of curvature, and 45 mm in diameter. The roller 2 (having 8 to 15 mm thickness of rubber) is of 120 mm diameter at the central part, 154 mm diameter at the ends and 1200 mm length. The bearings 3 are of 6210ZZ grade (in conformity with JIS standard). The hardness (shear) of the rubber is ordinarily set at about 35 and at about 80, in the cases where the material to be passed is cloth and metal plate respectively.

The bellows-shaped cylinder 30 to Figure 4C and the cylinder 40 having spiral gaps 41 and 42 of Figure 4D are illustrated as intermediate members provided between the bearings and the member forming the surface layer of the roller in the above-mentioned embodiments. That is, a member in place of the bearing casings and the roller, or a member with which the bearing casings and the roller are covered, and may be used as the member forming the surface layer of a roller under a roll according to the present invention.

The spiral gap 41 in the cylinder 40 of Figure 4D is wound clockwise and the spiral gap 42 is wound counterclockwise with the central part of the cylinder 40 as a boundary, so when acted upon by an axial force the diameter of the cylinder 40 can be reduced by contracting the gaps 41 and 42 in response to the rotational speed of the roller. This permits increase in the strength of the roll under rotation. For this reason, the use of these spiral gaps may be advantageously applied to high-speed and large rolls.

Embodiments of roll according to the present invention utilize the flat (axial straight line) part of the roller when material is to be passed in the flat or approximately flat state, whereby distortion or a permanent set is prevented or is suppressed, the material can be passed in a stable manner, and the speed can be maximized. Furthermore, there is the possibility not only of passing the material with a wide contact with the surface of the roller, but also of modifying the force tending to extend the material in its cross-wise direction so acting advantageously on the material. As a result, wrinkling can be prevented or removed, or the width of the material can be extended. The degree of the afore-mentioned action depends on the relation between the extending force and the strength of the material.

Metallic thin plates or foils, plastics films or sheets, and sheet articles such as cloth and paper are suitable materials to be passed.

In particular, as shown in Figure 3C, the roll R3 has an advantageous feature wherein the axial curved line 23 can be arranged on the lower side of the roll R3 in the case of passing a material S subject to gravity, whereby the contact width between the material S and the surface of the roller 2c can be made wider.

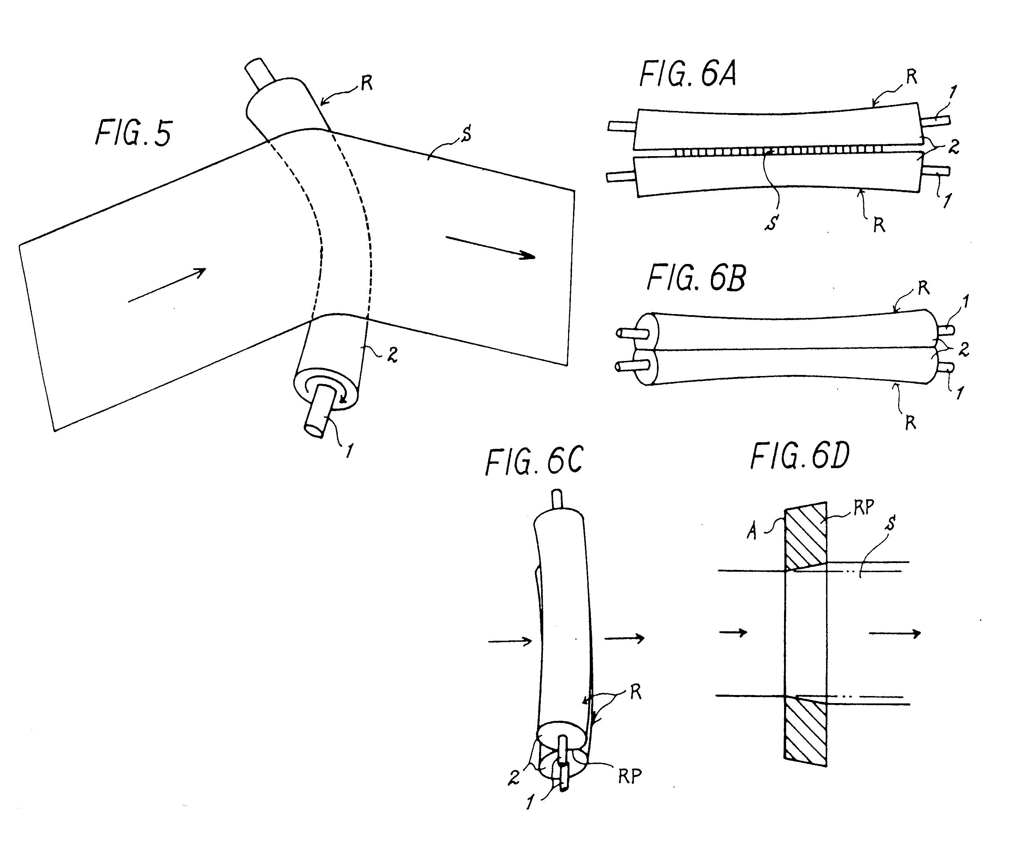

An advantageous application of the elasticity type roll is, as shown in Figure 5, to pass a material which wound from the concave to the convex side of the roller surface. In this case, the change in the effective axial length of the roller causes an increasing force tending to extend the material in its cross-wise direction (or conversely tending to contract the material when it passes in the opposite direction). In each case the force is dependent on the difference in peripheral velocity caused by the difference in the circumference of the roller.

Another advantageous application of the elasticity type roll is, as shown in Figure 6A to 6C, to arrange a pair of rolls R opposite to each other, utilizing the elasticity or the compressibility of the rollers 2. With this system, it is possible to adapt the extending force in the cross-wise direction, and caused by the pair of rolls respectively acting on the material S in combining manner. In addition, slipping of the material S on the surface of the rollers can be prevented by the extending force.

In the arrangement of Figure 6A the axial straight line parts of the rollers 2 in the roll R are opposite to each other with a predetermined gap left therebetween. This arrangement may be applied to a combination utilizing the straight lines 21 and 24 of the rolls R1 and R3, a combination utilizing the catenary curve 22 of the roll R2 and the curved part 23 of the roll R3 and to an amplitude type roll.

Figures 6B and 6C have some part of roller 2 arranged opposite to each other with a contact made therebetween in the state where the contact regions are compressed to be flat. In particular, Figure 6C has the rollers arranged opposite to each other in the state where they are compressed to be flat in such manner that it is possible to pass the material S from the concave side of the roll R towards the convex side. In that case, as shown in Figure 6D, since a restricting force acts on the material S on the side A at which it is introduced, before being passed over the compressed and flat part RP at which the surface layer of the roller and the material S make contact with each other, the width of the material S is restricted, and there is the advantageous feature that it is not necessary to use a different roll for restricting the width of the material S.

The roll according to the present invention may be used together with a wandering prevention means such, for example, as a crown type roll whose circumference at the central part is greater than at the ends. In that case, it is preferable that the roll according to the present invention is arranged where the wandering prevention force caused by the wandering prevention means is effective.

## Claims

1. A roll (R1, R2, R3) comprising:
a curved roller shaft (1a);
characterised by:
a roller (2a, 2b, 2c) the external circumference of which increases progressively in an axial direction from the central part towards each end of the roller (2a, 2b, 2c).

2. A roll (R1, R2, R3) according to claim 1 wherein the surface layer of the roller (2a, 2b, 2c) comprises a material which responds elastically to the angle or rotation of the roller (2b, 2b, 2c) about the roller shaft (1a).

3. A roll (R1, R2, R3) according to claim 2 wherein said material is rubber, soft metal or soft ceramic.

4. A roll (R1) according to claim 1, claim 2 or claim 3 wherein when the roll (R1) is mounted such that the vertical elevation projection of the curved roller shaft (1a) is concave downwards, the upper part of the external surface of the roller contains an axial straight line (21).

5. A roll (R2) according to claim 1, claim 2 or claim 3 wherein when the roll (R1) is mounted such that the vertical elevation projection of the curved roller shaft (1a) is concave downwards, the upper part of the external surface of the roller contains an axial concave catenary curve (22).

6. A roll (R3) according to claim 1, claim 2 or claim 3 wherein when the roll (R1) is mounted such that the vertical elevation projection of the curved roller shaft (1a) is concave downwards, the upper part of the external surface of the roller contains an axial convex curve (23).

7. A roll (R1) according to any one of the preceding claims wherein said roller (2a, 2b, 2c) comprises a cylinder (40) having spiral gaps (41, 42) formed therein.

FIG.1A

FIG.1B

# FIG. 2

d
22
8
7 6
R2
2b
6 7 8
1a

# FIG. 3A

d
23
8
7 6
R3
25
2c
6 7 8
1a

# FIG.3B

24
23
24
2c
1a
25
R3

# FIG.3C

25
8
7 6
2c
R3
S
23
6 7 8
1a

0236067

FIG.4A

FIG.4B

FIG.4C

FIG.4D

FIG.5

FIG.6A  FIG.6B  FIG.6C  FIG.6D

FIG. 7A

FIG. 7B

FIG. 7C